**Europäisches Patentamt**

**European Patent Office**

**Office européen des brevets**

(11) Veröffentlichungsnummer : **0 660 647 A1**

## (12) EUROPÄISCHE PATENTANMELDUNG

(21) Anmeldenummer : **94810692.7**

(22) Anmeldetag : **05.12.94**

(51) Int. Cl.$^6$ : **H05B 7/148,** H05B 7/156

(30) Priorität : **22.12.93 DE 4343899**

(43) Veröffentlichungstag der Anmeldung :
**28.06.95 Patentblatt 95/26**

(84) Benannte Vertragsstaaten :
**CH DE FR IT LI**

(71) Anmelder : **ABB Management AG**
**Haselstrasse 16**
**CH-5401 Baden (CH)**

(72) Erfinder : **Gaupp, Osvin**
**Eichtalboden 83**
**CH-5400 Baden (CH)**

(54) **Regelungsverfahren für einen Gleichstromlichtbogenofen.**

(57)   Gleichstromlichtbogenöfen (8) erzeugen im Betrieb Blindlastschwankungen, die zu unerwünschten Flickererscheinungen insbesondere in einem Frequenzbereich von 2 Hz - 20 Hz führen. Zur Reduzierung dieser Flickererscheinungen wird einer langsamen Stromregelung des durch Gleichrichter (5, 5') gesteuerten Gleichstromlichtbogenofens (8) eine vergleichsweise schnelle Blindleistungsregelung überlagert. Dadurch erübrigt sich der Einsatz eines Blindleistungskompensators zum Ausgleich der Blindlastschwankungen.

Fig.1

EP 0 660 647 A1

## TECHNISCHES GEBIET

Bei der Erfindung wird ausgegangen von einem Regelungsverfahren für einen Gleichstromlichtbogenofen nach dem Oberbegriff des Patentanspruchs 1.

## STAND DER TECHNIK

Mit dem Oberbegriff nimmt die Erfindung auf einen Stand der Technik Bezug, wie er aus der EP 0 068 180 B1 bekannt ist. Dort sind zur Eliminierung von Fickererscheinungen 2 unabhängige Regelkreise vorgesehen, und zwar ein Stromregelkreis mit einem Stromrichter als Stellglied und ein Spannungsregelkreis mit einer Elektrodenverstelleinrichtung als Stellglied, wobei das Ausgangssignal des Stromreglers zu dem Gleichspannungsistwert als Vorsteuerwert summiert wird.

Da der Blindleistungsbedarf eines netzkommutierten Gleichrichters vom Betriebspunkt abhängt, führt die Ausregelung der Laständerungen noch immer zu unerwünschten Blindleistungs- und damit zu Spannungsschwankungen im Netz. Diese Spannungsschwankungen erzeugen in Beleuchtungsanlagen schwankende Lichtstärken (Flicker), die störend wirken können.

In der US-A-5,155,740 ist eine Flicker-Kompensationseinrichtung für Gleichstromlichtbogenöfen angegeben, bei der eine Regelung des Stromrichters nur in Abhängigkeit von der detektierten Blindleistung des Lichtbogenofens erfolgt.

Nachteilig dabei ist, daß ein relativ teurer Blindleistungskompensator benötigt wird. Bei kleinen Elektrodenströmen kann die Blindleistung des Ofens zu klein werden. Mit fest eingebauten Kondensatorbänken führt dies zu einer Überkompensation, was häufig von Netzbetreibern nicht akzeptiert wird.

## DARSTELLUNG DER ERFINDUNG

Die Erfindung, wie sie im Patentanspruch 1 definiert ist, löst die Aufgabe, ein Regelungsverfahren für einen Gleichstromlichtbogenofen der eingangs genannten Art derart weiterzuentwickeln, daß der Flickerpegel verringert wird, ohne die mittlere Einschmelzleistung zu reduzieren.

Ein Vorteil der Erfindung besteht darin, daß auf teure Blindleistungskompensatoren und/oder Glättungsdrosseln verzichtet werden kann.

## KURZE BESCHREIBUNG DER ZEICHNUNGEN

Die Erfindung wird nachstehend anhand eines Ausführungsbeispiels erläutert. Es zeigen:

Fig. 1 einen Gleichstrom-Lichtbogenofen mit einem Stromregelkreis, einem Elektrodenregelkreis und einem Blindleistungsregelkreis,

Fig. 2 die Frequenzabhängigkeit einer normalisierten Flickeramplitude,

Fig. 3 Kennlinien des Störfrequenzganges bei unterschiedlichen Betriebsbedingungen,

Fig. 4 Gleichrichterkennlinien für konstante Blindleistungen und

Fig. 5 ein Wirk-/Blindleistungsdiagramm eines Gleichrichters.

## WEGE ZUR AUSFÜHRUNG DER ERFINDUNG

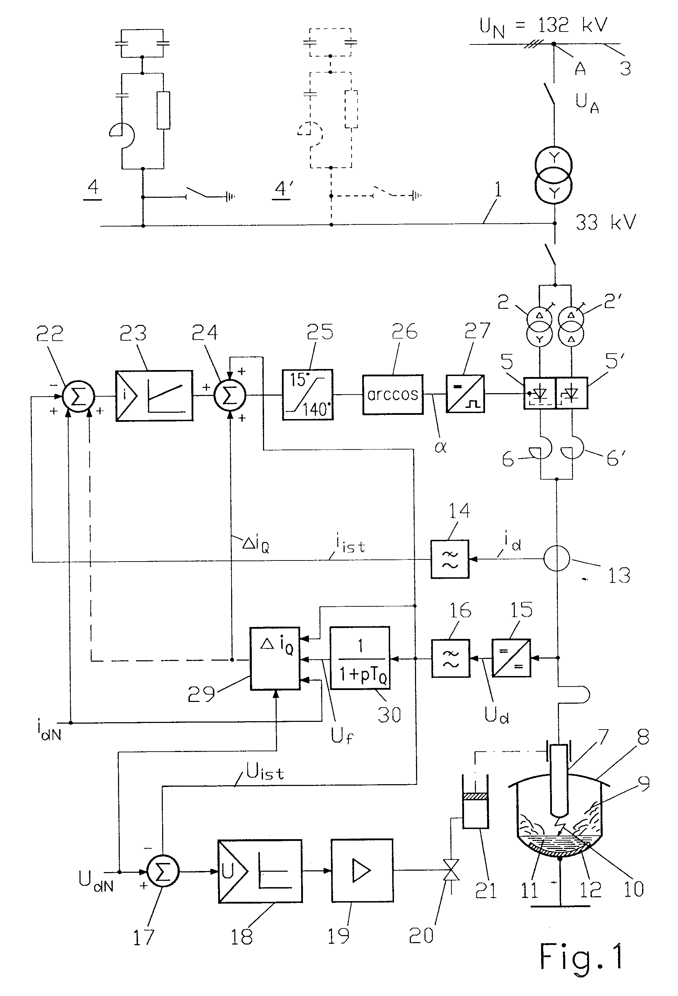

Die Figur 1 zeigt einen Gleichstromlichtbogenofen (8) mit einer Elektrode bzw. Kathode (7), welche über 2 Reaktoren bzw. Drosselspulen (6, 6'), die in Parallelzweigen mit je einem Gleichrichter (5, 5') und je einem Ofentransformator (2, 2') mit mehreren Schaltstufen in Reihe geschaltet sind, an ein Wechselstromnetz (1) mit einer Wechselspannung von 33 kV angeschlossen ist. Eine im Bodenbereich des Lichtbogenofens (8) angeordnete 2. Elektrode bzw. Anode (12) ist mit dem Pluspol der Gleichrichter (5, 5') verbunden (nicht dargestellt). Zwischen dem unteren Ende der Kathode (7) und einem zu schmelzenden Gut bzw. Schrott (9) sowie mit der Oberfläche einer Schmelze bzw. eines Schmelzbades (11) brennt ein Lichtbogen (10).

Das Wechselstromnetz (1) ist mit Filterzweigen (4, 4') für kapazitive Blindleistung verbunden und ferner über einen Hochspannungstransformator und einen Schalter in einem Netzanschlußpunkt (A) an ein 3phasiges Hochspannungsnetz (3) mit einer Nennwechselspannung $(U_N)$ von 132 kV angeschlossen. Die Netzspannung im Netzanschlußpunkt (A) ist mit $(U_A)$ bezeichnet.

Ein Stromwandler (13) in der Stromleitung der Elektrode (7) erfaßt einen Gleichstrom $(i_d)$ bzw. die Lichtbogenstromstärke; er ist ausgangsseitig über ein 1.

Tiefpaßfilter (14) mit einem negierenden Eingang eines 1.

Summiergliedes bzw. Summierers (22) verbunden. Das Tiefpaßfilter (14) hat eine Übertragungsfunktion

$$\ddot{U}_{14} = k_{Fi}/(1 + p \cdot T_{Fi}),$$

wobei $k_{Fi}$ eine Konstante, p den Laplace-Operator mit der Bedeutung einer komplexen Frequenz und $T_{Fi}$ eine vorgebbare Filterzeitkonstante mit einem Vorzugswert von 2,5 ms bedeuten.

Einem nichtnegierenden Eingang des 1. Summierers (22) ist eine vorgebbare Sollstromstärke ($i_{dN}$) bzw. ein Sollstromwertsignal für den Lichtbogen (10) zugeführt; ausgangsseitig ist dieser über einen Stromregler (23) mit PI-Charakteristik mit einem nichtnegierenden Eingang eines 2. Summierers (24) elektrisch verbunden. Der Stromregler (23) hat eine Übertragungsfunktion

$$\ddot{U}_{23} = k_i \cdot (1 + p \cdot T_i)/(p \cdot T_i),$$

wobei $k_i$ eine Konstante mit einem Vorzugswert von 0,2, p den Laplace-Operator mit der Bedeutung einer komplexen Frequenz und $T_i$ eine vorgebbare Zeitkonstante mit einem Vorzugswert von 30 ms bedeuten.

Der 2. Summierer (24) ist ausgangsseitig über einen Zündwinkelbegrenzer (25) mit vorgebbaren Zündwinkelgrenzwerten von vorzugsweise 15°el. und 140°el. mit einem nachgeschalteten arccos-Funktionsgeber (26) verbunden, welcher ausgangsseitig ein Gleichrichter-Stellgrößensignal ($\alpha$), entsprechend einem Zündwinkel, einem Zündimpulswandler (27) liefert, der ausgangsseitig die Gleichrichter (5, 5') steuert.

Ein mit der Stromleitung der Elektrode (7) elektrisch verbundener Spannungswandler (15) erfaßt eine Gleichspannung bzw. Lichtbogenspannung ($U_d$) des Gleichstromlichtbogenofens (8); er ist ausgangsseitig über ein 2. Tiefpaßfilter (16) mit einem nichtnegierenden Eingang des Summierers (24), ferner mit einem Eingang eines Funktionsgebers (29), mit einem Eingang eines 3. Tiefpaßfilters (30) und einem negierenden Eingang eines 3. Summierers (17) verbunden. Das 2. Tiefpaßfilter (16) hat eine Übertragungsfunktion

$$\ddot{U}_{16} = k_U/(1 + p \cdot T_U),$$

wobei $k_U$ eine Konstante, p den Laplace-Operator mit der Bedeutung einer komplexen Frequenz und $T_U$ eine vorgebbare Filterzeitkonstante mit einem Vorzugswert von 1 ms bedeuten. Das 3. Tiefpaßfilter (30) hat eine Übertragungsfunktion

$$\ddot{U}_{30} = k_Q/(1 + p \cdot T_Q),$$

wobei $k_Q$ eine Konstante mit einem Vorzugswert 1, p den Laplace-Operator mit der Bedeutung einer komplexen Frequenz und $T_Q$ eine vorgebbare Filterzeitkonstante mit einem Vorzugswert von 1 ms bedeuten.

Der Funktionsgeber (29), dem eingangsseitig ferner das Ausgangssignal $U_f$ des 3. Tiefpaßfilters (30), das Signal der Sollstromstärke ($i_{dN}$) und ein vorgebbares Sollgleichspannungssignal ($U_{dN}$) zugeführt sind, berechnet eine Stellgröße ($\Delta i_Q$) eines Blindleistungsregelkreises gemäß:

$$\Delta i_Q = k_q \cdot i_{dN} \cdot \{[(1 - U_f^2)/(1 - U_{ist}^2/U_{dN}^2)]^{0,5} - 1\},$$

wobei $k_q$ ein vorgebbarer Faktor ist, $U_{ist}$ = gefilterte Lichtbogenspannung des Lichtbogenofens (8).

Die Stellgröße ($\Delta i_Q$) des Blindleistungsregelkreises ist einem nichtnegierenden Eingang des 2. Summierers (24) zugeführt.

Alternativ kann diese Stellgröße ($\Delta i_Q$) anstatt dem 2. Summierer (24) einem nichtnegierenden Eingang des 1. Summierers (22) zugeführt sein, wie gestrichelt angedeutet.

Einem nichtnegierenden Eingang des 3. Summierers (17) ist das Sollgleichspannungssignal ($U_{dN}$), entsprechend einem Zündwinkelsollwert im Bereich von 15° - 50°, vorzugsweise im Bereich von 25° - 35°, zugeführt. Ausgangsseitig ist der Summierer (17) mit einem Elektrodenregler (18) mit einer Proportionalcharakteristik verbunden, der ausgangsseitig über einen Ventilverstärker (19) auf ein Ventil (20) einer Elektrodenverstelleinrichtung (21) wirkt. Die Elektrodenverstelleinrichtung (21), z. B. eine hydraulische Pumpe mit einer Verstellmechanik und einem Elektrodengeschwindigkeitsregler, ist mechanisch mit der Kathode (7) gekoppelt und ermöglicht deren Höhenverstellung; sie wirkt als ein Verzögerungsglied 1. Ordnung.

Die Elektrodenregelung arbeitet etwa 10mal langsamer als die Stromregelung. Die Höhenverstellung der Kathode (7) erfolgt so, daß die Gleichrichter (5, 5') im Mittel mit einer Aussteuerung von z. B. 25°el. arbeiten, unabhängig von der Sekundärspannung der Ofentransformatoren (2, 2') und vom eingestellten Stromsollwert ($i_{dN}$). Der Einfachheit halber sind Werte und ihnen zugeordnete Signale gleich bezeichnet.

Die erfindungsgemäße Stromregelung weist einen unterlagerten Stromregelkreis auf, der in einem relativ langen Zeitraum von 0,5 s - 1 s den Mittelwert des Stromes konstant hält, und einen überlagerten, schnellen Blindleistungsregelkreis, der in einem Zeitbereich von ca. 0,1 s Blindleistungsschwankungen minimiert. Dieser Blindleistungsregelkreis weist aus Schnelligkeitsgründen eine Vorwärtsregelung auf, bei welcher auf Grund der gemessenen Ofenspannung bzw. Lichtbogenspannung ($U_d$) der Betriebspunkt der konstanten Blindleistung berechnet wird. Die berechneten Werte werden dem Stromregelkreis entweder vor dem Zündwinkelbegrenzer (25) oder dem Stromsollwert ($i_{dN}$) aufgeschaltet.

Die erfindungsgemäße Regelung wirkt wie ein auf die Frequenz von 9 Hz abgestimmtes Sperrfilter.

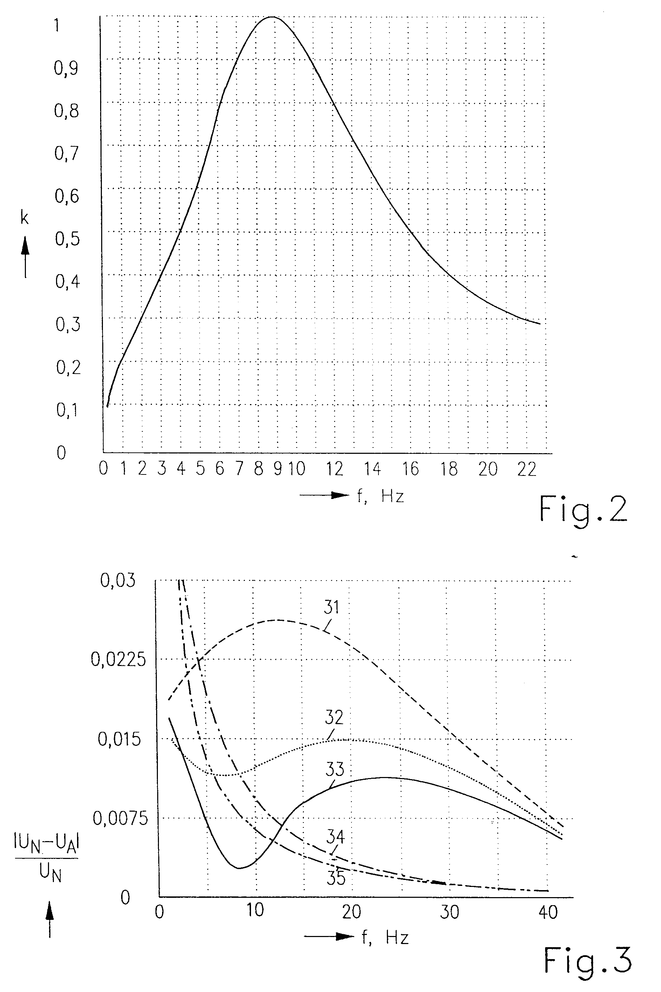

Fig. 2 zeigt eine Augenempfindlichkeitskurve für Flicker im Hochspannungsnetz (3), wobei auf der Ordinate eine normalisierte Flickeramplitude (k) und auf der Abszisse die Frequenz (f) in Hz aufgetragen sind. Man erkennt daraus, daß ein Flicker von 9 Hz am meisten stört.

Fig. 3 zeigt Störfrequenzgänge für unterschiedliche Betriebsbedingungen, wobei auf der Ordinate das Verhältnis der Betragsdifferenz von Nennwechselspannung ($U_N$) und Netzspannung ($U_A$) im Netzanschlußpunkt (A) zur Nennwechselspannung ($U_N$) und auf der Abszisse die Frequenz in Hz aufgetragen sind. Kurve (31) zeigt einen Störfrequenzgang bei einer Induktivität der Drosselspulen (6, 6') von je 21 μH nur mit Stromregelung. Kurve (32) gilt für gleiche Induktivitäten, jedoch mit einer Spannungsaufschaltung, wobei das Ausgangssignal des 2. Tiefpaßfilters (16) dem 2. Summierer (24) zugeführt ist, nicht jedoch die Stellgröße ($\Delta i_Q$) des Blindleistungsregelkreises. Bei Kurve (33) ist erfindungsgemäß zusätzlich die Stellgröße ($\Delta i_Q$) des Blindleistungsregelkreises aufgeschaltet. Man erkennt hier die starke Filterwirkung bei 9 Hz.

Die Kurven (34) und (35) zeigen zum Vergleich Störfrequenzgänge bei einer Induktivität der Drosselspulen (6, 6') von je 514 μH nur mit Stromregelung bzw. gesteuert mit einem Gleichrichter-Stellgrößensignal (α) von 43°el. Nachteilig dabei sind ein großer Platzbedarf und hohe Kosten für die Drosselspulen (6, 6').

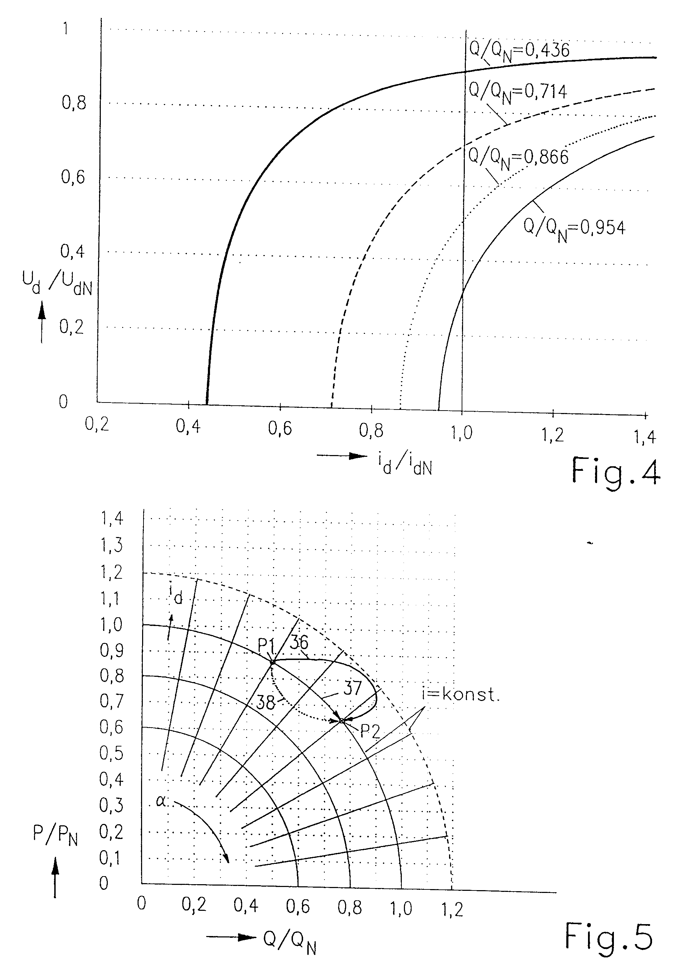

Fig. 4 zeigt 4 Gleichrichterkennlinien für konstante Blindleistung (Q), wobei auf der Ordinate das Verhältnis von Lichtbogenspannung ($U_d$) zu Sollgleichspannung ($U_{dN}$) und auf der Abszisse das Verhältnis von Gleichstrom ($i_d$) zu Sollstromstärke ($i_{dN}$) aufgetragen sind. Aus diesen Kurven ist ersichtlich, daß bei einer Lastspannungsänderung ein Betriebspunkt mit gleichem Blindleistungsbedarf angesteuert werden kann. Ferner ist ersichtlich, daß bei einer Spannungsabsenkung der Gleichstrom ($i_d$) verkleinert und umgekehrt, bei einer Spannungserhöhung vergrößert werden muß, um den Blindleistungsbedarf konstant zu halten. Es muß eine Übersteuerung gegenüber einer Konstantstromregelung stattfinden.

Der Mittelwert des Gleichstromes ($i_d$) muß dem Nennstrom der Gleichrichter (5, 5') entsprechen, um die geforderte Einschmelzleistung zu gewährleisten. Um eine Überdimensionierung der Halbleiter zu vermeiden, sollte die Stromregelzeit der thermischen Halbleiterzeitkonstante angepaßt werden (Sekundenbereich).

Fig. 5 zeigt ein Wirk-/Blindleistungs-Diagramm eines Gleichrichters, bei dem auf der Ordinate das Verhältnis von Wirkleistung (P) zu Nennwirkleistung ($P_N$) und auf der Abszisse das Verhältnis von Blindleistung (Q) zu Nennblindleistung ($Q_N$) aufgetragen sind. Pfeile zeigen in Richtung zunehmender Gleichstromstärke ($i_d$) bzw. Zündwinkel (α). Die kreisbogenförmigen Linien gelten für konstanten Strom. Bewegt man sich in diesem Diagramm von einem Punkt (P1) zu einem davon verschiedenen Punkt (P2) mit gleicher Gleichstromstärke ($i_d$), so erfolgt dies bei reiner Stromregelung gemäß einer Regelkurve (36), bei zusätzlicher Spannungsaufschaltung gemäß einer Regelkurve (37) und bei erfindungsgemäß noch zusätzlicher Aufschaltung der Stellgröße ($\Delta i_Q$) des Blindleistungsregelkreises gemäß einer Regelkurve (38). Man erkennt, daß von den 3 Regelkurven (36, 37, 38) die Regelkurve (38) am wenigsten Blindleistung (Q) für den Übergang erfordert.

BEZEICHNUNGSLISTE

| 1 | Wechselstromnetz, Mittelspannungsnetz |
|---|---|
| 2, 2' | Ofentransformatoren mit mehreren Schaltstufen |
| 3 | Hochspannungsnetz |
| 4, 4' | Filterzweige für kapazitive Blindleistung |
| 5, 5' | Gleichrichter |
| 6, 6' | Drosselspulen, Reaktoren |
| 7 | Kathode, Elektrode |
| 8 | Gleichstromlichtbogenofen |
| 9 | zu schmelzendes Gut, Schrott |
| 10 | Lichtbogen |
| 11 | Schmelze, Schmelzbad |
| 12 | Anode, 2. Elektrode |
| 13 | Stromwandler |
| 14, 16, 30 | Verzögerungsglieder 1. Ordnung, Trägheitsglieder, Tiefpaßfilter |
| 15 | Spannungswandler |
| 17, 22, 24 | Summierglieder, Summierer |
| 18 | Elektrodenregler, Spannungsregler |
| 19 | Ventilverstärker |
| 20 | Ventil |
| 21 | Elektrodenverstelleinrichtung |
| 23 | Stromregler |
| 25 | Begrenzer, Zündwinkelbegrenzer |
| 26 | Funktionsgeber für arccos |
| 27 | Zündimpulswandler |
| 29 | Funktionsgeber für $\Delta i_Q$ |
| 31 - 35 | Flickerkurven |

| | |
|---|---|
| 36 - 38 | Regelkurven |
| A | Netzanschlußpunkt |
| f | Frequenz |
| i | Strom |
| $i_{st}$ | Stromistwertsignal |
| $i_d$ | Gleichstrom, Lichtbogenstromstärke |
| $i_{dN}$ | Stromsollwertsignal, Sollstromstärke |
| k | normalisierte Flickeramplitude |
| p | komplexe Frequenz |
| P | Wirkleistung |
| $P_N$ | Nennwirkleistung |
| P1, P2 | Kurvenpunkte in Fig. 5 |
| Q | Blindleistung |
| $Q_N$ | Nennblindleistung |
| $T_Q$ | Blindleistungszeitkonstante |
| $U_A$ | Netzspannung bei A |
| $U_{ist}$ | gefilterte Istspannung von 8 |
| $U_N$ | Nennspannung von 3 |
| $U_{dN}$ | Sollspannung von 8 |
| $U_f$ | Ausgangssignal von 30 |
| $\alpha$ | Zündwinkel für 27 |
| $\Delta i_Q$ | Stellgröße des Blindleistungsregelkreises |

**Patentansprüche**

1.  Regelungsverfahren für einen Gleichstromlichtbogenofen (8),
    a) dessen Lichtbogenstromstärke ($i_d$) in Abhängigkeit von einem vorgebbaren Stromsollwert ($i_{dN}$) und
    b) in Abhängigkeit von einer Lichtbogenspannung ($U_d$) geregelt wird,
    dadurch gekennzeichnet,
    c) daß der Stromregelung eine von der Blindleistung (Q) des Gleichstromlichtbogenofens (8) abhängige Regelung überlagert ist.

2.  Regelungsverfahren nach Anspruch 1, dadurch gekennzeichnet, daß ein unterlagerter Stromregelkreis den Mittelwert der Lichtbogenstromstärke ($i_d$) innerhalb einer Zeitdauer von 0,5 s - 1 s wenigstens annähernd konstant hält.

3.  Regelungsverfahren nach Anspruch 1 oder 2, dadurch gekennzeichnet, daß die von der Blindleistung (Q) abhängige Regelung Blindleistungsschwankungen innerhalb von 250 ms minimiert.

4.  Regelungsverfahren nach Anspruch 1 oder 2, dadurch gekennzeichnet, daß die von der Blindleistung (Q) abhängige Regelung Blindleistungsschwankungen innerhalb von 180 ms minimiert.

5.  Regelungsverfahren nach einem der Ansprüche 1 bis 4, dadurch gekennzeichnet, daß die von der Blindleistung (Q) abhängige Regelung einem Zündwinkelbegrenzer (25) für mindestens einen Gleichrichter (5, 5') eine Stellgröße ($\Delta i_Q$) aufschaltet.

6.  Regelungsverfahren nach einem der Ansprüche 1 bis 4, dadurch gekennzeichnet, daß die von der Blindleistung (Q) abhängige Regelung einem Stromsollwert ($i_{dN}$) eine Stellgröße ($\Delta i_Q$) aufschaltet.

7.  Regelungsverfahren nach einem der Ansprüche 5 oder 6, dadurch gekennzeichnet, daß die Stellgröße ($\Delta i_Q$) eines Blindleistungsregelkreises oder der von der Blindleistung (Q) abhängigen Regelung gemäß:
    $$\Delta i_Q = k_q \cdot i_{dN} \cdot \{[(1 - U_{f2})/(1 - U_{ist}^2/U_{dN}^2)]^{0,5} - 1\}$$
    gebildet wird, mit: $k_q$ = vorgebbarer Faktor, $i_{dN}$ = Sollstromstärke des Lichtbogenofens (8), $U_f = 1/(1 + p \cdot T_Q)$, p = komplexe Frequenz, $T_Q$ = Blindleistungszeitkonstante, $U_{ist}$ = gefilterte Lichtbogenspannung und $U_{dN}$ = Sollgleichspannung des Lichtbogenofens (8).

8.  Regelungsverfahren nach Anspruch 7, dadurch gekennzeichnet,
    a) daß die Blindleistungszeitkonstante ($T_Q$) in einem Zeitbereich 60 ms $\leqq T_Q \leqq$ 250 ms,
    b) insbesondere in einem Zeitbereich 10 ms $\leqq T_Q \leqq$ 180 ms liegt.

Fig.1

Fig.2

Fig.3

Fig.4

Fig.5

EP 0 660 647 A1

Europäisches
Patentamt

EUROPÄISCHER RECHERCHENBERICHT

Nummer der Anmeldung

EP 94810692.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.6) |
|---|---|---|---|
| D,A | EP - B - 0 068 180 (BROWN, BOVERI) * Ansprüche 1,3; Fig. 1 * | 1,7 | H 05 B 7/148 H 05 B 7/156 |
| A | EP - A - 0 498 239 (ASEA BROWN BOVERI) * Zusammenfassung; Anspruch 1; Fig. 1 * | 1,7 | |

RECHERCHIERTE SACHGEBIETE (Int. Cl.6)

H 05 B 7/00

Der vorliegende Recherchenbericht wurde für alle Patentansprüche erstellt.

| Recherchenort | Abschlußdatum der Recherche | Prüfer |
|---|---|---|
| WIEN | 30-03-1995 | TSILIDIS |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

9